# EUROPEAN PATENT SPECIFICATION

(11) **EP 3 120 805 B1**
(45) Date of publication and mention of the grant of the patent: **14.03.2018**
(21) Application number: 16151380.9
(22) Date of filing: 14.01.2016
(51) Int. Cl.: A61C 8/00, A61C 7/00

(54) **ORTHODONTIC STRUCTURE CAPABLE OF IMPLANTING IMPLANTS AND STRAIGHTENING TEETH**
ORTHODONTISCHE STRUKTUR ZUM IMPLANTIEREN VON IMPLANTATEN UND RICHTEN VON ZÄHNEN
STRUCTURE ORTHODONTIQUE PERMETTANT D'IMPLANTER DES IMPLANTS ET DE REDRESSER LES DENTS

(43) Date of publication of application: 25.01.2017
(73) Proprietor: Wu, Chien-Te, 10576 Taipei City (TW); Biomate Medical Devices Technology Co., Ltd., 806 Kaohsiung City (TW)
(72) Inventor: WU, Chien-Te, Taipei City 10576 (TW)
(74) Representative: Cabinet Chaillot

(56) References cited:
- WO-A1-2007/101488
- CN-Y- 201 211 245
- US-A- 4 988 292
- US-A- 5 836 768
- US-A- 5 993 213
- US-A1- 2011 165 532

## Description

### BACKGROUND OF THIS INVENTION

### 1. Field of this invention

This invention relates to an orthodontic design fixed on an implant and relates particularly to an orthodontic structure capable of implementing the implant treatment and the orthodontic treatment.

### 2. Description of the Related Art

The purpose of orthodontic treatment is to correct or straighten the misalignment of teeth, so-called "abnormal bites", and help people retrieve the normal occlusion. Generally, most patients who need the orthodontic treatment are children or teenagers. If the treatment can be made at an early stage, the possibility of malocclusion can be reduced. Nowadays, more and more adults accept the orthodontic treatment for having a good facial appearance. However, if the patient has missing and irregular teeth and needs concurrent remedies, the dentist needs to set up different processes for straightening and correcting according to the state of the oral cavity. For example, if the irregular teeth is slight, the orthodontic treatment specialized in straightening teeth can come before the implant treatment specialized in the missing teeth. If the patient has serious irregular and missing teeth, the orthodontic treatment should come after the implant treatment. In general, there is a waiting period for the healing of the implant treatment or for straightening teeth, no matter which treatment comes first. The latter treatment cannot proceed unless the former treatment completes. It is noted that the duration of either treatment, including the waiting period, may need at least three to six months, one year or even years. In other words, it usually needs more than two years to complete the entire processes for treatment. This situation prolongs the entire treatment time. Furthermore, there must be additional anchorage surgery in the treatment process, so the treatment time cannot be shortened. The prolongation of the period easily makes the daily life of the patient inconvenient and wastes time.

US 2011/165532 A1 discloses an orthodontic structure as defined in the preamble of claim 1.

### SUMMARY OF THIS INVENTION

An object of this invention is to provide an orthodontic structure which reduces the time of making any extra anchorage and omits extra surgery to shorten the treatment period of straightening or correcting teeth, thereby carrying out the implant treatment and the orthodontic treatment at the same time and increasing the effect of straightening teeth.

An orthodontic structure of this invention is as defined in claim 1 and includes a body, a fastening part extending from the body along a first axis and fastenable to an implant which forms an artificial root, and at least one traction assembly connected to the body. At least one threaded connecting hole is formed in the body. The traction assembly includes an orthodontic table where at least one locking recess is formed for holding an archwire in place and a threaded adjustment part extending outwards from the orthodontic table. The threaded adjustment part engages the threaded connecting hole. Accordingly, when the fastening part is positioned on the implant embedded into the alveolar bone to cause a combination between the orthodontic structure and the implant, the positioning state of the orthodontic structure conduces to a reduction in the time of implementing any extra anchorage process. The archwire is held by the orthodontic table of the traction assembly so that the orthodontic table and peripheral orthodontic braces by which the archwire is held can be in mutual traction and help each other. Thus, when the implant treatment is executed, the orthodontic treatment can also be carried into execution. Thus, the needed treatment time for implant and orthodontic treatment can be largely reduced, and good implanting and straightening effects can be attained.

Preferably, the body has at least one binding recess formed thereon, preferably located between a top face of the body and the threaded connecting hole.

Preferably, the body has at least one engaging hole, which may be formed apart from the connecting hole, so that an engagement unit can engage the threaded engaging hole.

Preferably, the orthodontic table has peripheral faces, and more than one locking recess can be formed on any, some or all of the peripheral faces. Thus, the archwire can be held by any of the locking recesses.

Preferably, the orthodontic table has at least one fixing hole formed thereon, preferably going through the peripheral faces of the orthodontic table.

The advantages of this invention are more apparent upon reading the following descriptions in conjunction with the drawings.

### BRIEF DESCRIPTION OF THE DRAWINGS

Fig. 1 is an exploded view showing a first preferred embodiment of this invention;
Fig. 2 is a schematic view showing the first preferred embodiment in use;
Fig. 3 is a schematic view showing a second preferred embodiment of this invention;
Fig. 4 is a perspective view showing a third preferred embodiment of this invention;
Fig. 5 is a schematic view showing the third preferred embodiment in use; and
Fig. 6 is a perspective view showing a variation of the third preferred embodiment.

### DETAINED DESCRIPTION OF THE PREFERRED EMBODIMENTS

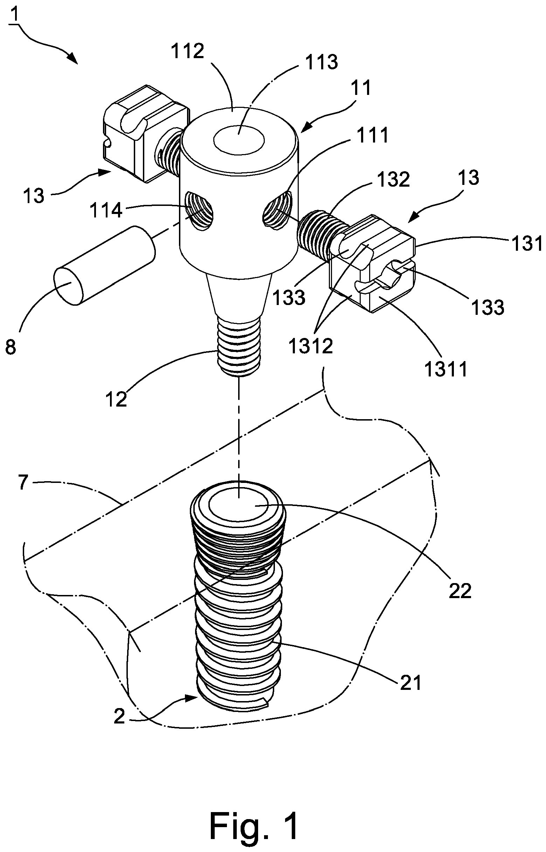

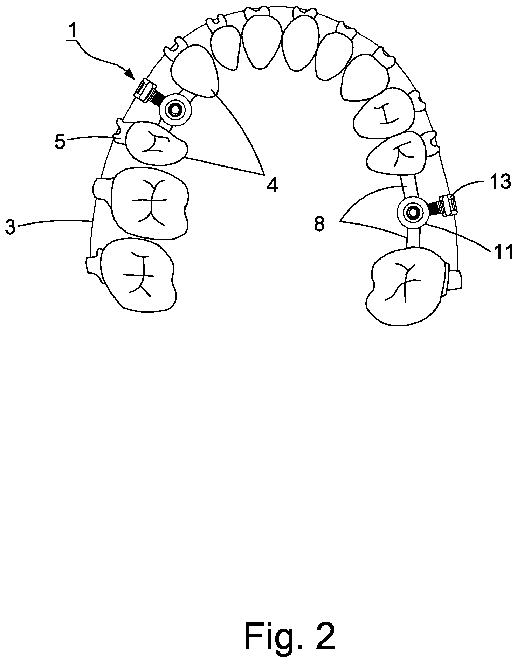

Referring to Fig. **1**, an orthodontic structure **1** of a first preferred embodiment of this invention is fastenable to an implant **2** of an artificial root and is used to catch an archwire **3**, shown in Fig. **2**, for straightening or correcting teeth **4.** The implant **2** has a positioning part **21** embedded into an alveolar bone **7** (as sketchily shown) and a screwing hole **22** defined through a top face of the implant **2.** Further, the orthodontic structure **1** includes a body **11**, a fastening part **12** extending from the body **11**, along a first axis, and at least one traction assembly **13** connected to another side of the body **11.** The fastening part **12** is screwable into the screwing hole **22** of the implant **2** for positioning.

The body **11**, preferably a cylinder, has at least one threaded connecting hole **111** formed therein, a driving socket **113** formed through a top face **112** of the body **11** for allowing an entry of a drive tool (not shown), and may have at least one engaging hole **114** formed thereon and spaced apart from the threaded connecting hole **111.** There can be multiple threaded connecting holes **111.** In this and following preferred embodiments, two threaded connecting holes **111** are taken as an example, and the threaded connecting holes **111**, as shown in Fig. **1**, are respectively formed on opposite sides of a periphery of the body **11.** Each of the threaded connecting holes **111** provides an engagement with the traction assembly **13.** Further, the engaging hole **114** is also formed on the periphery of the body **11** between the threaded connecting holes **111.** There can also be multiple engaging holes **114.** Herein, it is adopted that there are two engaging holes **114**, each of which allows an insertion of an engagement unit **8.** The engagement unit **8** can be an elastic spring (as schematically shown in Fig. **1****)** or other suitable designs.

Still referring to Fig. **1****,** the traction assembly **13** has an orthodontic table **131** and a threaded engagement part **132** constituting an adjustment part extending outwards from the orthodontic table **131** to provide an engagement with the threaded connecting hole **111.** The orthodontic table **131** further has at least one locking recess **133** formed thereon. Preferably, there can be multiple locking recesses **133** formed on different peripheral faces of the orthodontic table **131.** For example, Fig. **1** shows that one locking recess **133** is recessed into a side peripheral face **1311** of the orthodontic table **131**, and another locking recess **133** is recessed into another peripheral face **1312** which may be vertical to the side peripheral face **1311.** Thus, the archwire **3** can be gripped by any of the locking recesses **133** and becomes positioned. Referring to Fig. **1** and Fig. **2**, the implant treatment is executed by embedding the positioning part **21** of the implant **2** into a predrilled bore on the alveolar bone **7.** When the implant **2** is integrated into the alveolar bone **7** for osseointegration, the dentist can choose a better way to use the orthodontic structure **1** according to teeth of a patient. For example, if the oral cavity of patient has a serious problem and needs to be well straightened, two traction assemblies **13** can be connected to the body **11**, as shown in Fig. **1**, to concurrently correct the teeth at an internal side and an external side of the teeth **4.** If the dentist considers that the problem is slight, only one traction assembly **13** can be connected to the body **11**, as shown in Fig. **2****.**

After deciding the installation of the traction assembly **13**, a drive tool (not shown) is put into the driving socket **113** to threadedly fasten the fastening part **12** to the screwing hole **22** of the implant **2.** Thus, the orthodontic structure **1** is firmly fixed to the implant **2.** Then, the entry distance of the adjustment part **132** into the threaded connecting hole **111** can be properly adjusted according to the distance between peripheral teeth **4** beside the orthodontic structure **1**, thereby allowing the side peripheral face **1311** of the orthodontic table **131** and orthodontic braces **5** which are attached to the peripheral teeth **4** to be set on a same horizontal line, as shown in Fig. **2** where The orthodontic table **131** and the orthodontic braces **5** can be in juxtaposition. Thus, the problem that the orthodontic process does not go smoothly can be solved. Concurrently, to confirm that the artificial tooth or teeth (not shown) can be well placed into a space formed by the aforementioned implant process, one end of the engagement unit **8** is inserted into the engaging hole **114**, and the other end thereof props against the side of the peripheral teeth **4.** Finally, the archwire **3** is attached to the orthodontic braces **5** of the teeth **4** and is held by the locking recess **133** of each orthodontic table **131.** It is noted that the dentist can decide which locking recess **133** is suitable to position the archwire **3** according to the state of the teeth and the plan for orthodontics. The archwire **3** can be held by the locking recess **133** formed on the side peripheral face **1311** or by any of the locking recesses **133** formed on another peripheral faces **1312.**

From above, when the orthodontic structure **1** is positioned, a requisite anchorage effect for orthodontics is obtained which allows an adjustment in different processes of the orthodontic treatment. Thus, an initial preparation for the orthodontic treatment is done.

During a waiting period for the implant treatment, the orthodontic structure **1** and the orthodontic braces **5** can be used to start the orthodontic treatment directly, thereby reducing the time of having an extra anchorage action and prevent the occurrence of having extra surgery. Every time the archwire **3** is adjusted in every different stage, the teeth **4** attached to the orthodontic braces **5** and the orthodontic structure **1** which are subject to the adjustment of the archwire **3** allow the teeth **4** which need to be straightened to move slightly and slowly on the alveolar bone **7**, and the orthodontic table **131** and peripheral orthodontic braces **5** by which the archwire **3** is held are also in mutual traction and support each other. Concurrently, when the orthodontic process proceeds in order to move the teeth **4** to their desirable positions, the engagement units **8** connected to two sides of the body **11** subject the side of the peripheral teeth **4** to an adjustment to prevent the peripheral teeth **4** from getting too close to each other. After the orthodontic process is completed, the artificial tooth can be smoothly put on the space where the implant **2** is initially located. Thus, the implant treatment and the orthodontic treatment can be executed concurrently to shorten and save the treatment time for implantation and orthodontics, prevent a daily inconvenience caused by a long treatment period and obtain good implanting and straightening effects.

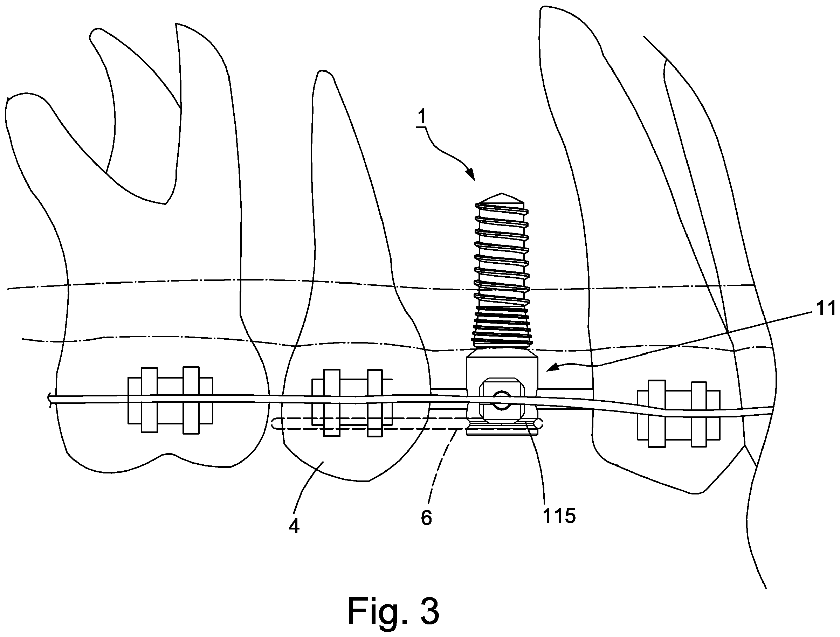

Referring to Fig. **3**, an orthodontic structure **1** of a second preferred embodiment has the same elements as the first preferred embodiment. The concatenation of correlated elements is still the same as the first preferred embodiment. This preferred embodiment is characterized in that at least one binding recess **115** is formed on the body **11** and located between the top face **112** and the threaded connecting hole **111** which is invisible in this figure. The body **11** can also have multiple binding recesses **115** formed thereon to adapt to different remedies for straightening teeth **4.** One end of an orthodontic rubber band **6** is inserted in the binding recess **115**, and the other end thereof is positioned on the tooth **4** beside the orthodontic structure **1**, as schematically shown.

When the implant treatment and the orthodontic treatment concur, the binding recess **115** helps correct the canting tooth or teeth **4** beside the orthodontic structure **1.** Specifically, two ends of the orthodontic rubber band **6** are held between the binding recess **115** and the canting tooth **4** to gradually straighten the tooth **4** under a tension force of the orthodontic rubber band **6.** The orthodontic rubber band **6** also adjusts the requisite tension as required by the orthodontics. Accordingly, every time the straightened tooth **4** is adjusted by the tension force, the problem that the tooth **4** cants or deviates during the orthodontic treatment can be solved, and the straightened tooth **4** can gradually move to a desirable place and become positioned. Thus, the treatment period for implanting and straightening can be shortened, and the implant treatment and the orthodontic treatment can work concurrently.

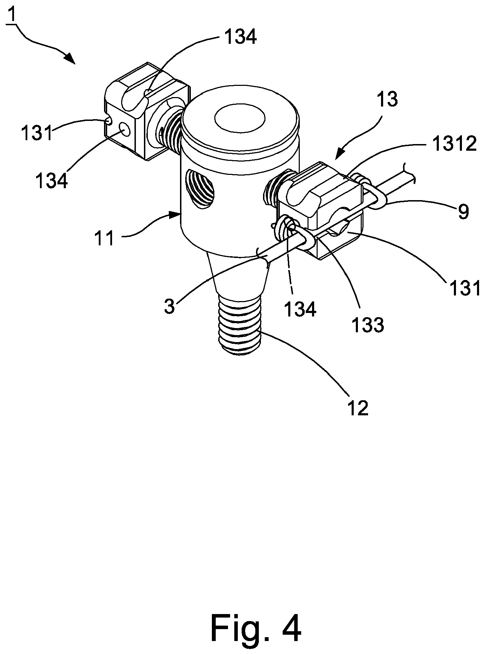

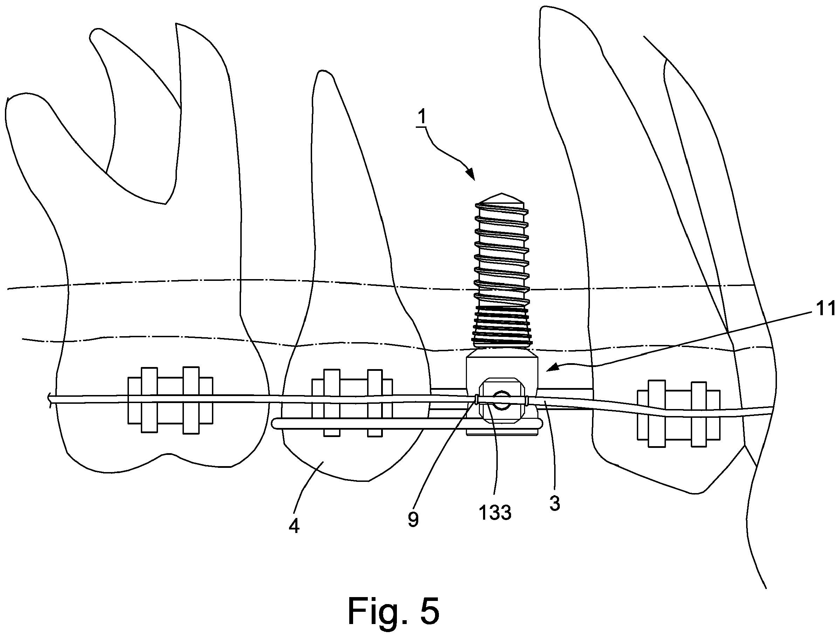

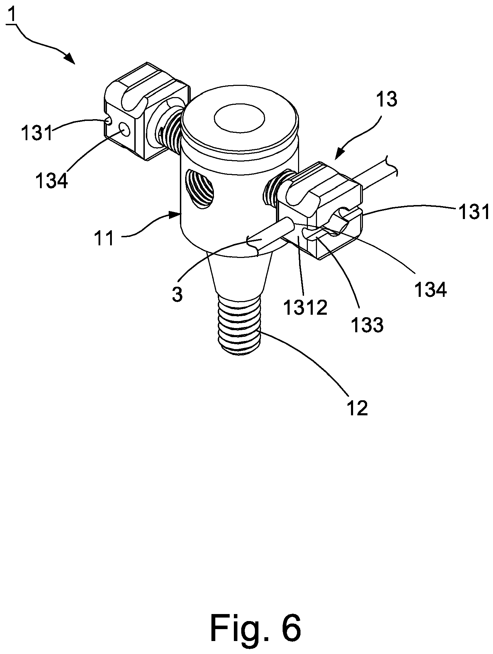

Referring to Fig. **4**, an orthodontic structure **1** of a third preferred embodiment has a body **11**, a fastening part **12** and at least one traction assembly **13.** The concatenation of correlated elements is still the same as the previous preferred embodiment. This preferred embodiment is characterized in that at least one fixing hole **134** is formed on the orthodontic table **131.** The fixing hole **134** goes through the peripheral faces **1312** of the orthodontic table **131.** A support unit **9**, as shown in Figs. **4** and **5**, can extend through the fixing hole **134** for positioning. Alternatively, the archwire **3**, as shown in Fig. **6**, can extend through the fixing hole **134** directly for positioning. If the archwire **3** is to be held by the locking recess **133**, two ends of the support unit **9** which project outwards from the fixing hole **134** as shown in Figs. **4** and **5** catches and limits the archwire **3** and makes sure that the archwire **3** is put in the locking recess **133.** Thus, the escape of the archwire **3** from the orthodontic structure **1** caused by neglectfulness of the patient during the orthodontic period can be prevented, and the full orthodontic course can go smoothly and stably in order to execute the implant treatment and the orthodontic treatment concurrently and conduce to good implanting and straightening effects.

To sum up, this invention takes advantage of the orthodontic structure which is fixed on the implant embedded into the alveolar bone in advance to reduce the time of having any extra anchorage additionally and omit additional surgery. Thus, the treatment period of the orthodontics can be shortened. The traction assembly can be used to hold the metal wire in place, so the implant treatment and the orthodontic treatment can be executed concurrently. Thus, a good implant treatment and a good effect of straightening teeth can be obtained.

While the embodiments of this invention are shown and described, it is understood that further variations and modifications may be made without departing from the scope of this invention.

## Claims

1. An orthodontic structure (1) fastenable to an implant (2) which forms an artificial root and suitable for holding an archwire (3) in place for straightening teeth (4), wherein said orthodontic structure (1) comprises a body (11), a fastening part (12) extending from saidbody (11) along a first axis and fastenable to said implant (2), and at least one traction assembly (13) connected to said body (11), wherein said body (11) has at least one threaded connecting hole (111) formed therein, said at least one traction assembly (13) including an orthodontic table (131) and a threaded engaging part (132) extending outwards from said orthodontic table (131) and providing an engagement with said threaded connecting hole (111), said orthodontic table (131) having at least one locking recess (133) formed thereon capable of holding said metal wire (3) in place,
**characterised in that** said at least one threaded connecting hole (111) formed in said body (11) opens laterally on said body (11) along a second axis perpendicular to the first axis, whereby said threaded engaging part (132) constitutes an adjustment part.

2. The orthodontic structure (1) according to claim 1, wherein said body (11) has at least one binding recess (115) formed thereon.

3. The orthodontic structure (1) according to claim 1, wherein said body (11) has at least one engaging hole (114) for allowing an engagement unit (8) to engage therewith, wherein the at least one engaging hole (114) are spaced apart from the threaded connecting holes.

4. The orthodontic structure (1) according to claim 2, wherein said body (11) has at least one engaging hole (114) for allowing an engagement unit (8) to engage therewith. therewith, wherein the at least one engaging hole (114) are spaced apart from the threaded connecting holes.

5. The orthodontic structure (1) according to claim 1, wherein said orthodontic table (131) has peripheral faces (1311, 1312) where more than one locking recess (133) is formed, said archwire (3) being able to be held by any of said locking recesses (133).

6. The orthodontic structure (1) according to claim 1, wherein said orthodontic table (131) has at least one fixing hole (134) formed thereon.

7. The orthodontic structure (1) according to claim 5, wherein said orthodontic table (131) has at least one fixing hole (134) formed thereon.

## Patentansprüche

1. Orthodontische Struktur (1), die an einem Implantat (2) befestigbar ist, das eine künstliche Wurzel bildet und geeignet zum Halten eines Bogendrahts (3) zum Ausrichten von Zähnen (4) ist, wobei die orthodontische Struktur (1) einen Körper (11) umfasst, ein Befestigungsteil (12), das von dem Körper (11) entlang einer ersten Achse verläuft und an dem Implantat (2) befestigbar ist, und mindestens eine Zugeinheit (13), die mit dem Körper (11) verbunden ist, wobei der Körper (11) mindestens ein Gewindeverbindungsloch (111) hat, das darin gebildet ist, wobei die mindestens eine Zugeinheit (13) einen orthodontischen Tisch (131) umfasst, wie auch ein Gewindeeingriffsteil (132), das sich außerhalb des orthodontischen Tisches (131) erstreckt und Eingriff in das Gewindeverbindungsloch (111) bietet, wobei der orthodontische Tisch (131) mindestens eine Rastnut (133) umfasst, die darauf gebildet ist und den Draht (3) an Ort und Stelle hält,
**gekennzeichnet dadurch, dass** das mindestens eine Gewindeverbindungsloch (111), das in dem Körper (11) gebildet ist, sich seitlich auf den Körper (11) entlang einer zweiten Achse senkrecht zu der ersten Achse öffnet, wodurch besagtes gewindeeingreifendes Teil (132) ein Justierungsteil bildet.

2. Orthodontische Struktur (1) nach Anspruch 1, wobei der Körper (11) mindestens eine Bindungsnut (115) hat, die darauf gebildet ist.

3. Orthodontische Struktur (1) nach Anspruch 1, wobei der Körper (11) mindestens ein Eingriffsloch (114) hat, damit eine Eingriffseinheit (8) darin eingreift, wobei das mindestens eine Eingriffsloch (114) von den Gewindeverbindungslöchern beabstandet ist.

4. Orthodontische Struktur (1) nach Anspruch 2, wobei der Körper (11) mindestens ein Eingriffsloch (114) hat, damit eine Eingriffseinheit (8) darin eingreift, wobei das mindestens eine Eingriffsloch (114) von den Gewindeverbindungslöchern beabstandet ist.

5. rthodontische Struktur (1) nach Anspruch 1, wobei der orthodontische Tisch (131) Randseiten (1311, 1312) umfasst, wo mehr als eine Rastnut (133) gebildet ist, der Bogendraht (3) kann von jeder beliebigen der Rastnuten (133) gehalten werden.

6. Orthodontische Struktur (1) nach Anspruch 1, wobei der orthodontische Tisch (131) mindestens ein Befestigungsloch (134) hat, das darauf gebildet ist.

7. Orthodontische Struktur (1) nach Anspruch 5, wobei der orthodontische Tisch (131) mindestens ein Befestigungsloch (134) hat, das darauf gebildet ist.

## Revendications

1. Structure orthodontique (1) apte à être fixée à un implant (2) qui forme une racine artificielle et appropriée pour maintenir un arc dentaire (3) en place pour redresser des dents (4), ladite structure orthodontique (1) comprenant un corps (11), une partie de fixation (12) s'étendant à partir dudit corps (11) le long d'un premier axe et apte à être fixée audit implant (2), et au moins un ensemble de traction (13) relié audit corps (11), ledit corps (11) ayant au moins un trou de raccordement fileté (111) formé à l'intérieur de celui-ci, ledit au moins un ensemble de traction (13) comprenant une bague orthodontique (131) et une partie d'engagement filetée (132) s'étendant vers l'extérieur à partir de ladite bague orthodontique (131) et fournissant un engagement avec ledit trou de raccordement fileté (111), ladite bague orthodontique (131) ayant au moins un évidement de verrouillage (33) formé sur celle-ci capable de maintenir ledit arc dentaire (3) en place,
**caractérisée par le fait que** ledit au moins un trou de raccordement fileté (111) formé dans ledit corps (11) débouche latéralement sur ledit corps (11) le long d'un second axe perpendiculaire au premier axe, ce par quoi ladite partie d'engagement filetée (132) constituant une partie d'ajustement.

2. Structure orthodontique (1) selon la revendication 1, dans laquelle ledit corps (11) a au moins un évidement de liaison (115) formé sur celui-ci.

3. Structure orthodontique (1) selon la revendication 1, dans laquelle ledit corps (11) a au moins un trou d'engagement (114) pour permettre à une unité d'engagement (8) de s'engager avec celui-ci, l'au moins un trou d'engagement (114) étant espacé des trous de raccordement filetés.

4. Structure orthodontique (1) selon la revendication 2, dans laquelle ledit corps (11) a au moins un trou d'engagement (114) pour permettre à une unité d'engagement (8) de s'engager avec celui-ci, l'au moins un trou d'engagement (114) étant espacé des trous de raccordement filetés.

5. Structure orthodontique (1) selon la revendication 1, dans laquelle ladite bague orthodontique (131) a des faces périphériques (1311, 1312) où plus d'un évidement de verrouillage (133) est formé, ledit arc dentaire (3) étant apte à être maintenu par l'un quelconque desdits évidements de verrouillage (133).

6. Structure orthodontique (1) selon la revendication 1, dans laquelle ladite bague orthodontique (131) a au moins un trou de fixation (134) formé sur celle-ci.

7. Structure orthodontique (1) selon la revendication 5, dans laquelle ladite bague orthodontique (131) a au moins un trou de fixation (134) formé sur celle-ci.
